# EUROPEAN PATENT APPLICATION

(11) **EP 2 666 756 A1**
(43) Date of publication of application: **27.11.2013**
(21) Application number: 12736075.8
(22) Date of filing: 16.01.2012
(51) Int. Cl.: C03C 3/085, C03C 3/087, C03C 3/091, C03C 3/093, C03C 21/00

(54) **TEMPERED GLASS, AND TEMPERED GLASS PLATE**

(30) Priority: 18.01.2011 JP 2011007410
(71) Applicant: Nippon Electric Glass Co., Ltd., Otsu-shi Shiga 520-8639 (JP)
(72) Inventor: MURATA Takashi, Otsu-shi Shiga 520-8639 (JP); TOJYO Takako, Otsu-shi Shiga 520-8639 (JP)
(74) Representative: Tetzner, Michael
(86) International application number: PCT/JP2012/050712
(87) International publication number: WO 2012/099055

(57) **Abstract**

Provided is a tempered glass having a compression stress layer in a surface thereof, comprising, as a glass composition in terms of mass%, 50 to 75% of SiO₂, 5 to 20% of Al₂O₃, 0 to 8% of B₂O₃, 5 to 20% of Na₂O, 0.1 to 10% of K₂O, 0.1 to 15% of MgO, and 0.001 to 5% of SrO+BaO, and having a mass ratio (MgO+CaO+SrO+BaO) / (MgO+ZrO₂) of 0.3 to 1.5.

## Description

### Technical Field

The present invention relates to tempered glass and a tempered glass sheet, and more particularly, to tempered glass and a tempered glass sheet suitable for cover glass for a cellular phone, a digital camera, a personal digital assistant (PDA), a solar cell, or the like, or a glass substrate for a display (in particular, a touch panel display).

### Background Art

Devices such as a cellular phone, a digital camera, a PDA, a touch panel display, a large-screen television, and wireless lighting show a tendency of further prevalence. Devices such as an LCD and a PDP used in display parts thereof have been widely used since about the year 2000, and the sales amount thereof already accounts for 90% or more of that of displays in the display market at present.

In recent years, displays which enable 3D display have started to be widely used. In such 3D display, a motion parallax is necessary for providing a natural stereoscopic vision, and hence studies have been made on development of a multi-view type 3D display, which is capable of displaying images provided from different viewpoints.

A multi-view type 3D display involves a problem in that as the number of viewpoints increases, the resolution of 3D display lowers as long as the number of pixels in a screen of the multi-view type 3D display remains unchanged. Under the circumstances described above, development of a display having a higher resolution has been required in order to improve the resolution of 3D display. From the viewpoint of meeting the requirement, specifications regarding tiny bubbles, defects, and the like in glass tend to become stricter.

In addition, portable appliances equipped with a touch panel have been launched in the market in recent years, and tempered glass is used for protecting each display part of the portable appliances. As a demand for these portable appliances increases, the market of the tempered glass is increasingly developing. The tempered glass used for this application is required to have characteristics such as (1) having high mechanical strength and (2) being able to be supplied at low cost in a large amount (see, for example, Patent Literature 1 and Non Patent Literature 1).

### Citation List

Patent Literature 1: JP 2006-83045 A

Non Patent Literature 1: Tetsuro Izumitani et al., "New glass and physical properties thereof," First edition, Management System Laboratory. Co., Ltd., August 20, 1984, p. 451-498

### Summary of Invention

### Technical Problem

Devices such as an LCD and a PDP have been delivered and sold in large amounts heretofore, and a future issue of the devices is how to recycle them. However, when a glass sheet for an LCD or a PDP is produced by using a glass substrate taken out from a display module as cullet, tiny bubbles and defects are liable to occur in the glass, and hence it is difficult to meet the specifications in recent years. As a result, it is difficult to promote recycling of a glass substrate, and further the production cost of a glass substrate for an LCD or a PDP significantly rises. Under the circumstance described above, it is desired to develop tempered glass which can be produced by using a glass substrate for an LCD or a PDP as cullet.

Thus, a technical object of the present invention is to invent tempered glass which can be produced by using a glass substrate for an LCD or a PDP as cullet and has high mechanical strength.

### Solution to Problem

The inventors of the present invention have made various studies and have consequently found that defects existing in a protective member for a display give less influence on displaying performance than defects existing in a glass substrate for the display, and that, when the glass composition range of tempered glass is strictly controlled, even if a glass substrate for an LCD or a PDP is used as cullet, tiny bubbles and defects are difficult to occur in the tempered glass and sufficient mechanical strength can be ensured. The findings are proposed as the present invention. That is, a tempered glass of the present invention is a tempered glass having a compression stress layer in a surface thereof, comprising, as a glass composition in terms of mass%, 50 to 75% of SiO₂, 5 to 20% of Al₂O₃, 0 to 8% of B₂O₃, 5 to 20% of Na₂O, 0.1 to 10% of K₂O, 0.1 to 15% of MgO, and 0.001 to 5% of SrO+BaO, and having a mass ratio (MgO+CaO+SrO+BaO) / (MgO+ZrO₂) of 0.3 to 1.5. Herein, the term "SrO+BaO" refers to the total amount of SrO and BaO. The term "MgO+CaO+SrO+BaO" refers to the total amount of MgO, CaO, SrO, and BaO. The term "MgO+ZrO₂" refers to the total amount of MgO and ZrO₂.

Second, the tempered glass of the present invention preferably comprises, as a glass composition in terms of mass%, 50 to 70% of SiO₂, 7 to 20% of Al₂O₃, 0 to 5% of B₂O₃, 8 to 20% of Na₂O, 1 to 10% of K₂O, 1.5 to 12% of MgO, and 0.001 to 3% of SrO+BaO, and has a mass ratio (MgO+CaO+SrO+BaO)/(MgO+ZrO₂) of 0.4 to 1.4.

Third, the tempered glass of the present invention preferably comprises, as a glass composition in terms of mass%, 50 to 70% of SiO₂, 7 to 18% of Al₂O₃, 0 to 3% of B₂O₃, 10 to 17% of Na₂O, 2 to 9% of K₂O, 1.5 to 10% of MgO, and 0.001 to 3% of SrO+BaO, and has a mass ratio (MgO+CaO+SrO+BaO)/(MgO+ZrO₂) of 0.5 to 1.4.

Fourth, the tempered glass of the present invention preferably comprises, as a glass composition in terms of mass%, 50 to 70% of SiO₂, 8 to 17% of Al₂O₃, 0 to 1.5% of B₂O₃, 11 to 16% of Na₂O, 3 to 8% of K₂O, 1.8 to 9% of MgO, and 0.001 to 1% of SrO+BaO, and has a mass ratio (MgO+CaO+SrO+BaO)/(MgO+ZrO₂) of 0.5 to 0.9.

Fifth, the tempered glass of the present invention preferably comprises, as a glass composition in terms of mass%, 50 to 65% of SiO₂, 8 to 15% of Al₂O₃, 0 to 1% of B₂O₃, 12 to 15% of Na₂O, 4 to 7% of K₂O, 1.8 to 5% of MgO, and 0.001 to 0.5% of SrO+BaO, and having a mass ratio (MgO+CaO+SrO+BaO) / (MgO+ZrO₂) of 0.5 to 0. 8.

Sixth, the tempered glass of the present invention is preferably substantially free of As₂O₃, Sb₂O₃, and PbO. Herein, the gist of the phrase "substantially free of As₂O₃" resides in that As₂O₃ is not added positively as a glass component, but contamination with As₂O₃ as an impurity is allowable. Specifically, the phrase means that the content of As₂O₃ is less than 0.05 mass%. The gist of the phrase "substantially free of Sb₂O₃" resides in that Sb₂O₃ is not added positively as a glass component, but contamination with Sb₂O₃ as an impurity is allowable. Specifically, the phrase means that the content of Sb₂O₃ is less than 0.05 mass%. The gist of the phrase "substantially free of PbO" resides in that PbO is not added positively as a glass component, but contamination with PbO as an impurity is allowable. Specifically, the phrase means that the content of PbO is less than 0.05 mass%.

Seventh, the tempered glass of the present invention preferably further comprises 100 to 3, 000 ppm of SnO₂+SO₃+Cl. Herein, the term "SnO₂+SO₃+Cl" refers to the total amount of SnO₂, SO₃, and Cl.

Eighth, in the tempered glass of the present invention, it is preferred that the compression stress value of the compression stress layer be 200 MPa or more, and the thickness (depth) of the compression stress layer be 10 µm or more. Herein, the phrase "compression stress value of the compression stress layer" and the phrase "thickness of the compression stress layer" refer to values which are calculated from the number of interference fringes on a sample and each interval between the interference fringes, the interference fringes being observed when a surface stress meter (such as FSM-6000 manufactured by Toshiba Corporation) is used to observe the sample.

Ninth, the tempered glass of the present invention preferably has a liquidus temperature of 1,075°C or less. Herein, the term "liquidus temperature" refers to a temperature at which crystals of glass deposit after glass powder that has passed through a standard 30-mesh sieve (sieve opening: 500 µm) and remained on a 50-mesh sieve (sieve opening: 300 µm) is placed in a platinum boat and then kept in a gradient heating furnace for 24 hours.

Tenth, the tempered glass of the present invention preferably has a liquidus viscosity of 10^{4.0} dPa·s or more. Herein, the term "liquidus viscosity" refers to a value obtained by measurement of the viscosity of glass at the liquidus temperature using a platinum sphere pull up method.

Eleventh, the tempered glass of the present invention preferably has a temperature at 10^{4.0} dPa·s of 1,250°C or less. Herein, the term "temperature at 10^{4.0} dpa·s" refers to a value obtained by measurement using a platinum sphere pull up method.

Twelfth, the tempered glass of the present invention preferably has a temperature at 10^{2.5} dPa·s of 1,600°C or less. Herein, the term "temperature at 10^{2.5} dPa·s" refers to a value obtained by measurement using a platinum sphere pull up method.

Thirteenth, the tempered glass of the present invention preferably has a density of 2.6 g/cm³ or less. Herein, the "density" may be measured by a well-known Archimedes method.

Fourteenth, a tempered glass sheet of the present invention comprises any one of the above-mentioned tempered glasses.

Fifteenth, the tempered glass sheet of the present invention is preferably formed by a float method.

Sixteenth, the tempered glass sheet of the present invention is preferably used for a touch panel display.

Seventeenth, the tempered glass sheet of the present invention is preferably used for a cover glass for a cellular phone.

Eighteenth, the tempered glass sheet of the present invention is preferably used for a cover glass for a solar cell.

Nineteenth, the tempered glass sheet of the present invention is preferably used for a protective member for a display.

Twentieth, a tempered glass sheet of the present invention comprises, as a glass composition in terms of mass%, 50 to 70% of SiO₂, 7 to 20% of Al₂O₃, 0 to 5% of B₂O₃, 8 to 20% of Na₂O, 1 to 10% of K₂O, 1.5 to 12% of MgO, 0.001 to 3% of SrO+BaO, and 100 to 3,000 ppm of SnO₂+SO₃+Cl, has a molar ratio (MgO+CaO+SrO+BaO) / (MgO+ZrO₂) of 0.4 to 1.4, and has a length of 500 mm or more, a width of 500 mm or more, a thickness of 1.5 mm or less, a Young's modulus of 65 GPa or more, a compression stress value of a compression stress layer of 400 MPa or more, and a thickness of a compression stress layer of 30 µm or more. Herein, the "Young's modulus" may be measured by a well-known resonance method or the like.

Twenty-first, a glass to be tempered of the present invention comprises, as a glass composition in terms of mass%, 50 to 75% of SiO₂, 5 to 20% of Al₂O₃, 0 to 8% of B₂O₃, 5 to 20% of Na₂O, 0.1 to 10% of K₂O, 0.1 to 15% of MgO, and 0.001 to 5% of SrO+BaO, and has a mass ratio (MgO+CaO+SrO+BaO)/(MgO+ZrO₂) of 0.3 to 1.5.

### Advantageous Effect of Invention

According to the glass to be tempered of the present invention, even if a glass substrate for an LCD or a PDP is used as cullet, tiny bubbles and defects are difficult to occur in the tempered glass and sufficient mechanical strength can be ensured.

### Description of Embodiments

Tempered glass according to an embodiment of the present invention has a compression stress layer in a surface thereof, comprises, as a glass composition in terms of mass%, 50 to 75% of SiO₂, 5 to 20% of Al₂O₃, 0 to 8% of B₂O₃, 5 to 20% of Na₂O, 0.1 to 10% of K₂O, 0.1 to 15% of MgO, and 0.001 to 5% of SrO+BaO, and has a mass ratio (MgO+CaO+SrO+BaO) / (MgO+ZrO₂) of 0.3 to 1.5. Note that in the description of the content range of each component, the expression "%" means "mass%."

A method of forming a compression stress layer in a surface of glass includes a physical tempering method and a chemical tempering method. The tempered glass according to this embodiment is preferably produced by the chemical tempering method. The chemical tempering method is a method comprising introducing alkali ions each having a large ion radius into a surface of glass by ion exchange treatment at a temperature equal to or lower than the strain point of the glass. When the chemical tempering method is used to form a compression stress layer, the compression stress layer can be properly formed even in the case where the glass has a small thickness. In addition, even when the compression stress layer is formed and then the resultant tempered glass is cut, the tempered glass does not easily break unlike tempered glass produced by applying a physical tempering method such as an air cooling tempering method.

A glass substrate for an LCD or a PDP comprises components such as SiO₂, Al₂O₃, B₂O₃, alkali metal oxides, and alkaline earth metal oxides in the glass composition thereof. For example, the glass substrate for an LCD comprises 1 to 8 mass% of SrO+BaO in the glass composition. Thus, when tempered glass is produced by using a glass substrate for an LCD or a PDP as cullet, the glass composition is contaminated with SrO and BaO, possibly deteriorating the ion exchange performance of the tempered glass. Thus, in order to promote recycling of a glass substrate for an LCD or a PDP, it is necessary to design the composition so that the tempered glass exhibits excellent ion exchange performance even if SrO and BaO are added. The glass composition range of the tempered glass according to this embodiment is controlled as described above, and hence the tempered glass has good ion exchange performance even if SrO and BaO are added to the glass composition.

The reasons why the content range of each component in the tempered glass according to this embodiment has been controlled within the above-mentioned range are described below.

SiO₂ is a component that forms a network of glass. The content of SiO₂ is 50 to 75%, preferably 50 to 70%, 50 to 68%, 50 to 65%, particularly preferably 55 to 65%. When the content of SiO₂ is too small, vitrification does not occur easily, the thermal expansion coefficient increases excessively, and the thermal shock resistance is liable to lower. On the other hand, when the content of SiO₂ is too large, the meltability and formability are liable to lower, and the thermal expansion coefficient lowers excessively, with the result that it is difficult to match the thermal expansion coefficient with those of peripheral materials.

Al₂O₃ is a component that increases the ion exchange performance and is a component that increases the strain point or Young's modulus. The content of Al₂O₃ is 5 to 20%. When the content of Al₂O₃ is too small, the ion exchange performance may not be exerted sufficiently. Thus, the lower limit range of Al₂O₃ is suitably 6% or more, 7% or more, 8% or more, 9% or more, 10% or more, particularly suitably 12% or more. On the other hand, when the content of Al₂O₃ is too large, devitrified crystals are liable to deposit in the glass, and it is difficult to form a glass sheet by a float method, an overflow down-draw method, or the like. Further, the thermal expansion coefficient lowers excessively, and it is difficult to match the thermal expansion coefficient with those of peripheral materials. In addition, the viscosity of the glass increases and the meltability is liable to lower. Thus, the upper limit range of Al₂O₃ is suitably 19% or less, 17% or less, 16% or less, particularly suitably 15% or less.

B₂O₃ is a component that reduces the viscosity at high temperature and density, stabilizes glass for crystals to be unlikely precipitated, and reduces the liquidus temperature. However, when the content of B₂O₃ is too large, through ion exchange, coloring on a surface of glass called weathering occurs, water resistance lowers, the compression stress value of the compression stress layer lowers, and the thickness of the compression stress layer is liable to lower. Thus, the content of B₂O₃ is 0 to 8%, preferably 0 to 5%, 0 to 3%, 0 to 1.8%, 0 to 0.9%, 0 to 0.5%, particularly preferably 0 to 0.1%.

Na₂O is an ion exchange component and is a component that reduces the viscosity at high temperature to increase the meltability and formability. Na₂O is also a component that improves the devitrification resistance. The content of Na₂O is 5 to 20%. When the content of Na₂O is too small, the meltability lowers, the thermal expansion coefficient lowers, and the ion exchange performance is liable to lower. Thus, the lower limit range of Na₂O is suitably 8% or more, 9% or more, 10% or more, 11% or more, 12% or more, particularly suitably 13% or more. On the other hand, when the content of Na₂O is too large, the thermal expansion coefficient becomes too large, the thermal shock resistance lowers, and it is difficult to match the thermal expansion coefficient with those of peripheral materials. Further, the strain point lowers excessively, and the glass composition loses its component balance, with the result that the devitrification resistance lowers to the worse in some cases. Thus, the upper limit range of Na₂O is suitably 19% or less, 17% or less, particularly suitably 16% or less.

K₂O is a component that promotes ion exchange and allows the thickness of the compression stress layer to be easily enlarged among alkali metal oxides. K₂O is also a component that reduces the viscosity at high temperature to increase the meltability and formability. K₂O is also a component that improves the devitrification resistance. Thus, the content of K₂O is 0.1% or more and the lower limit range thereof is suitably 1% or more, 1.5% or more, 2% or more, 3% or more, particularly suitably 4% or more. However, when the content of K₂O is too large, the thermal expansion coefficient becomes too large, the thermal shock resistance lowers, and it is difficult to match the thermal expansion coefficient with those of peripheral materials. Further, the strain point lowers excessively, and the glass composition loses its component balance, with the result that the devitrification resistance tends to lower to the worse. Thus, the content of K₂O is 10% or less and the upper limit range thereof is suitably 8% or less, 7% or less, particularly suitably 6% or less.

MgO is a component that reduces the viscosity at high temperature to increase the meltability and formability and increases the strain point and Young's modulus, and is a component that has a great effect of increasing the ion exchange performance among alkaline earth metal oxides. Thus, the content of MgO is 0.1% or more and the lower limit range thereof is suitably 0.5% or more, 1% or more, 1.5% or more, 1.8% or more, particularly suitably 2% or more. However, when the content of MgO is too large, the density and thermal expansion coefficient increase, and the glass is liable to devitrify. Thus, the content of MgO is 15% or less and the upper limit range thereof is suitably 12% or less, 10% or less, 8% or less, 4% or less, 3.5% or less, particularly suitably 2.8% or less.

CaO has great effects of reducing the viscosity at high temperature to enhance the meltability and formability and increasing the strain point and Young's modulus without causing any reduction in devitrification resistance as compared to other components. The content of CaO is 0 to 10%. However, when the content of CaO is too large, the density and thermal expansion coefficient increase, and the glass composition loses its component balance, with the results that the glass is liable to devitrify and the ion exchange performance is liable to lower to the worse. Thus, the content of CaO is suitably 0 to 5%, 0 to 4%, 0 to 3.5%, 0 to 3%, 0 to 2%, particularly suitably 0 to 1%.

SrO+BaO is a component that reduces the viscosity at high temperature to increase the meltability and formability and increases the strain point and Young's modulus without causing any reduction in devitrification resistance. The content of SrO+BaO is 0.001 to 5%. When the content of SrO+BaO is too small, it is difficult to obtain the above-mentioned effects and it is difficult to promote the recycling of a glass substrate for an LCD or a PDP. The lower limit range of SrO+BaO is suitably 0.05% or more, 0.1% or more, particularly suitably 0.3% or more. On the other hand, when the content of SrO+BaO is too large, the density and thermal expansion coefficient increase, the ion exchange performance lowers, and the glass composition loses its component balance, with the result that the glass is liable to devitrify to the worse. The upper limit range of SrO+BaO is suitably 4% or less, 2% or less, particularly suitably 1% or less. Note that an SrO material and a BaO material may be used as materials for introducing SrO and BaO, but it is preferred to use the cullet of a glass substrate for an LCD or a PDP.

SrO is a component that reduces the viscosity at high temperature to increase the meltability and formability and increases the strain point and Young's modulus without causing any reduction in devitrification resistance. The content of SrO is 0 to 5%. When the content of SrO is too large, the density and thermal expansion coefficient increase, the ion exchange performance lowers, and the glass composition loses its component balance, with the result that the glass is liable to devitrify to the worse. The upper limit range of SrO is suitably 4% or less, 2% or less, particularly suitably 1% or less. Note that when the content of SrO is too small, it is difficult to obtain the above-mentioned effects and it is difficult to promote the recycling of a glass substrate for an LCD or a PDP. The lower limit range of SrO is suitably 0.001% or more, 0.05% or more, 0.1% or more, particularly suitably 0.3% or more.

BaO is a component that reduces the viscosity at high temperature to increase the meltability and formability and increases the strain point and Young's modulus without causing any reduction in devitrification resistance. The content of BaO is 0 to 5%. When the content of BaO is too large, the density and thermal expansion coefficient increase, the ion exchange performance lowers, and the glass composition loses its component balance, with the result that the glass is liable to devitrify to the worse. The upper limit range of BaO is suitably 4% or less, 2% or less, particularly suitably 1% or less. Note that when the content of BaO is too small, it is difficult to obtain the above-mentioned effects and it is difficult to promote the recycling of a glass substrate for an LCD or a PDP. The lower limit range of BaO is suitably 0.001% or more, 0.05% or more, 0.1% or more, particularly suitably 0.3% or more.

The content of MgO+CaO+SrO+BaO is preferably 0.101 to 16%, 0.2 to 11%, 0.5 to 9%, 1 to 5%, particularly preferably 2 to 4%. When the content of MgO+CaO+SrO+BaO is too small, it is difficult to increase the meltability and formability. On the other hand, when the content of MgO+CaO+SrO+BaO is too large, the density and thermal expansion coefficient increase, the devitrification resistance is liable to lower, and the ion exchange performance tends to lower.

ZrO₂ is a component that remarkably increases the ion exchange performance and is a component that increases the viscosity around the liquidus viscosity and the strain point. However, when the content of ZrO₂ is too large, the devitrification resistance may lower remarkably and the density may increase excessively. Thus, the upper limit range of ZrO₂ is suitably 10% or less, 8% or less, 6% or less, 4% or less, particularly suitably 3% or less. Note that when the ion exchange performance is to be increased, it is preferred to add ZrO₂ to the glass composition. In that case, the lower limit range of ZrO₂ is suitably 0.01% or more, 0.1% or more, 0.5% or more, 1% or more, particularly suitably 2% or more.

The mass ratio (MgO+CaO+SrO+BaO)/(MgO+ZrO₂) is 0.3 to 1.5. When the mass ratio (MgO+CaO+SrO+BaO) / (MgO+ZrO₂) is too large, the devitrification resistance lowers, the ion exchange performance lowers, and the density and thermal expansion coefficient increase excessively. On the other hand, when the mass ratio (MgO+CaO+SrO+BaO) / (MgO+ZrO₂) is too small, the liquidus temperature sharply rises and the liquidus viscosity is liable to lower. Thus, the upper limit range of the mass ratio (MgO+CaO+SrO+BaO) / (MgO+ZrO₂) is suitably 1.45 or less, 1.4 or less, 1.2 or less, 1.0 or less, 0.9 or less, particularly suitably 0.8 or less, and the lower limit range is suitably 0.4 or more, 0.5 or more, 0.55 or more, particularly suitably 0.6 or more.

In addition to the above-mentioned components, for example, the following components may be added.

Li₂O is an ion exchange component and is a component that reduces the viscosity at high temperature to increase the meltability and formability and increases the Young's modulus. Further, Li₂O has a great effect of increasing the compression stress value among alkali metal oxides, but when the content of Li₂O becomes extremely large in a glass system containing Na₂O at 5% or more, the compression stress value tends to lower to the worse. Further, when the content of Li₂O is too large, the liquidus viscosity lowers, the glass is liable to devitrify, and the thermal expansion coefficient increases excessively, with the result that the thermal shock resistance lowers and it is difficult to match the thermal expansion coefficient with those of peripheral materials. In addition, the viscosity at low temperature lowers excessively, and the stress relaxation occurs easily, with the result that the compression stress value lowers to the worse in some cases. Thus, the content of Li₂O is preferably 0 to 12%, 0 to 6%, 0 to 2%, 0 to 1%, 0 to 0.5%, 0 to 0.3%, particularly preferably 0 to 0.1%.

The range of the mass ratio K₂O/N₂O is suitably 0.1 to 0.8, 0.2 to 0.8, 0.2 to 0.7, particularly suitably 0.3 to 0.6. When the mass ratio K₂O/N₂O decreases, the thickness of the compression stress layer is liable to decrease, and when the mass ratio K₂O/N₂O increases, the compression stress value lowers, and the glass composition loses its component balance, with the result that the glass is liable to devitrify.

The content of Li₂O+Na₂O+K₂O is suitably 5.1 to 25%, 8 to 22%, 12 to 20%, particularly suitably 16. 5 to 20%. When the content of Li₂O+Na₂O+K₂O is too small, the ion exchange performance and meltability are liable to lower. On the other hand, when the content of Li₂O+Na₂O+K₂O is too large, the glass is liable to devitrify, and the thermal expansion coefficient increases excessively, with the result that the thermal shock resistance lowers and it is difficult to match the thermal expansion coefficient with those of peripheral materials. In addition, the strain point lowers excessively, with the result that a high compression stress value is hardly achieved in some cases. Moreover, the viscosity at around the liquidus temperature lowers, with the result that a high liquidus viscosity is hardly ensured in some cases. Note that the term "Li₂O+Na₂O+K₂O" refers to the total amount of Li₂O, Na₂O, and K₂O.

The mass ratio (MgO+CaO+SrO+BaO)/(Li₂O+Na₂O+K₂O) is preferably 0.5 or less, 0.35 or less, 0.3 or less, particularly preferably 0.25 or less. When the mass ratio (MgO+CaO+SrO+BaO)/(Li₂O+Na₂O+K₂O) increases, the devitrification resistance tends to lower and the density tends to increase.

TiO₂ is a component that increases the ion exchange performance and is a component that reduces the viscosity at high temperature. However, when the content of TiO₂ is too large, the glass is liable to be colored and to devitrify. Thus, the content of TiO₂ is preferably 0 to 3%, 0 to 1%, 0 to 0.8%, 0 to 0.5%, particularly preferably 0 to 0.1%.

ZnO is a component that increases the ion exchange performance and is a component that has a great effect of increasing the compression stress value, in particular. Further, ZnO is a component that reduces the viscosity at high temperature without reducing the viscosity at low temperature. However, when the content of ZnO is too large, the glass manifests phase separation, the devitrification resistance lowers, the density increases, and the thickness of the compression stress layer tends to decrease. Thus, the content of ZnO is preferably 0 to 6%, 0 to 5%, 0 to 3%, 0 to 1%, particularly preferably 0 to 0.5%.

P₂O₅ is a component that increases the ion exchange performance and is a component that increases the thickness of the compression stress layer, in particular. However, when the content of P₂O₅ is too large, the glass manifests phase separation, and the water resistance is liable to lower. Thus, the content of P₂O₅ is preferably 0 to 10%, 0 to 3%, 0 to 1%, particularly preferably 0 to 0.5%.

As a fining agent, one kind or two or more kinds selected from the group consisting of CeO₂, SnO₂, SO₃, and Cl (preferably the group consisting of SnO₂, Cl, and SO₃) may be added at 0 to 3%. The content of SnO₂+SO₃+Cl is preferably 0 to 1%, 100 to 3,000 ppm, 300 to 2,500 ppm, particularly preferably 500 to 2,500 ppm. When the content of SnO₂+SO₃+Cl is too large, the devitrification resistance is liable to lower. Note that when the content of SnO₂+SO₃+Cl is less than 100 ppm, it is difficult to obtain a fining effect.

The content range of SnO₂ is suitably 0 to 5,000 ppm, 0 to 3, 000 ppm, 0 to 2, 000 ppm. The content range of SO₃ is suitably 0 to 1,000 ppm, 0 to 800 ppm, particularly suitably 0 to 500 ppm. The content range of Cl is suitably 0 to 1,500 ppm, 0 to 1,200 ppm, 0 to 800 ppm, 0 to 500 ppm, particularly suitably 0 to 300 ppm.

The content of Fe₂O₃ is preferably less than 500 ppm, less than 400 ppm, less than 300 ppm, less than 200 ppm, particularly preferably less than 150 ppm. With this, the transmittance (400 nm to 770 nm) of glass having a thickness of 1 mm is easily improved (for example, 90% or more).

A rare earth oxide such as Nb₂O₅ or La₂O₃ is a component that increases the Young's modulus. However, the cost of the raw material itself is high, and when the rare earth oxide is added in a large amount, the devitrification resistance is liable to lower. Thus, the content of the rare earth oxide is preferably 3% or less, 2% or less, 1% or less, 0.5% or less, particularly preferably 0.1% or less.

A transition metal element (such as Co or Ni) that causes the intense coloration of glass may reduce the transmittance of glass. In particular, in the case where the glass is used for a touch panel display, when the content of the transition metal element is too large, the visibility of the touch panel display is liable to lower. Thus, it is preferred to select a glass raw material (including cullet) so that the content of a transition metal oxide is 0.5% or less, 0.1% or less, particularly 0.05% or less.

The tempered glass according to this embodiment is preferably substantially free of As₂O₃, Sb₂O₃, and PbO as the glass composition from environmental considerations. The tempered glass is also preferably substantially free of F. Herein, the gist of the phrase "substantially free of F" resides in that F is not added positively as a glass component, but contamination with F as an impurity is allowable. Specifically, the phrase means that the content of F is less than 0.05 mol%. The tempered glass is also preferably substantially free of Bi₂O₃. Herein, the gist of the phrase "substantially free of Bi₂O₃" resides in that Bi₂O₃ is not added positively as a glass component, but contamination with Bi₂O₃ as an impurity is allowable. Specifically, the phrase means that the content of Bi₂O₃ is less than 0.05 mol%.

The tempered glass according to this embodiment preferably has the following properties, for example.

The tempered glass according to this embodiment has a compression stress layer in a surface thereof. The compression stress value of the compression stress layer is preferably 300 MPa or more, 400 MPa or more, 500 MPa or more, 600 MPa or more, 700 MPa or more, particularly preferably 800 MPa or more. As the compression stress value becomes larger, the mechanical strength of the tempered glass becomes higher. On the other hand, when an extremely large compression stress is formed on the surface of the tempered glass, micro cracks are generated on the surface, which may reduce the mechanical strength of the tempered glass to the worse. Further, a tensile stress inherent in the tempered glass may increase extremely. Thus, the compression stress value of the compression stress layer is preferably 1, 500 MPa or less. Note that there is a tendency that the compression stress value is increased by increasing the content of Al₂O₃, TiO₂, ZrO₂, MgO, or ZnO in the glass composition or by reducing the content of SrO or BaO in the glass composition. Further, there is a tendency that the compression stress value is increased by shortening the ion exchange time or by reducing the temperature of an ion exchange solution.

The thickness of the compression stress layer is preferably 10 µm or more, 15 µm or more, 20 µm or more, 30 µm or more, particularly preferably 40 µm or more. As the thickness of the compression stress layer becomes larger, the tempered glass is more hardly cracked even when the tempered glass has a deep flaw, and a variation in the mechanical strength becomes smaller. On the other hand, as the thickness of the compression stress layer becomes larger, it becomes more difficult to cut the tempered glass. Thus, the thickness of the compression stress layer is preferably 500 µm or less, 200 µm or less, 150 µm or less, 100 µm or less, particularly preferably 80 µm or less. Note that there is a tendency that the thickness of the compression stress layer is increased by increasing the content of K₂O or P₂O₅ in the glass composition or by reducing the content of SrO or BaO in the glass composition. Further, there is a tendency that the thickness of the compression stress layer is increased by lengthening the ion exchange time or by increasing the temperature of an ion exchange solution.

The tempered glass according to this embodiment has a density of preferably 2.6 g/cm³ or less, particularly preferably 2.55 g/cm³ or less. As the density becomes smaller, the weight of the tempered glass can be reduced more. Note that the density is easily decreased by increasing the content of SiO₂, B₂O₃, or P₂O₅ in the glass composition or by reducing the content of an alkali metal oxide, an alkaline earth metal oxide, ZnO, ZrO₂, or TiO₂ in the glass composition.

The tempered glass according to this embodiment has a thermal expansion coefficient in the temperature range of 30 to 380°C of preferably 80 to 120 × 10⁻⁷/°C, 85 to 110 × 10⁻⁷/°C, 90 to 110 × 10⁻⁷/°C, particularly preferably 90 to 110 × 10⁻⁷/°C. When the thermal expansion coefficient is controlled within the above-mentioned ranges, it is easy to match the thermal expansion coefficient with those of members made of a metal, an organic adhesive, and the like, and the members made of a metal, an organic adhesive, and the like are easily prevented from being peeled off. Herein, the phrase "thermal expansion coefficient in the temperature range of 30 to 380°C" refers to a value obtained by measurement of an average thermal expansion coefficient with a dilatometer. Note that the thermal expansion coefficient is easily increased by increasing the content of an alkali metal oxide or an alkaline earth metal oxide in the glass composition, and in contrast, the thermal expansion coefficient is easily decreased by reducing the content of the alkali metal oxide or the alkaline earth metal oxide.

The tempered glass according to this embodiment has a strain point of preferably 500°C or more, 520 °C or more, particularly preferably 530°C or more. As the strain point becomes higher, the heat resistance is improved more, and the disappearance of the compression stress layer more hardly occurs when the tempered glass is subjected to thermal treatment. Further, as the strain point becomes higher, stress relaxation more hardly occurs during ion exchange treatment, and thus the compression stress value can be maintained more easily. Note that the strain point is easily increased by increasing the content of an alkaline earth metal oxide, Al₂O₃, ZrO₂, or P₂O₅ in the glass composition or by reducing the content of an alkali metal oxide in the glass composition.

The tempered glass according to this embodiment has a temperature at 10^{4.0} dPa·s of preferably 1,250°C or less, 1,230°C or less, 1,200°C or less, 1,180°C or less, particularly preferably 1,160°C or less. As the temperature at 10^{4.0} dPa·s becomes lower, a burden on a forming facility is reduced more, the forming facility has a longer life, and consequently, the production cost of the tempered glass is more likely to be reduced. The temperature at 10^{4.0} dPa·s is easily decreased by increasing the content of an alkali metal oxide, an alkaline earth metal oxide, ZnO, B₂O₃, or TiO₂ or by reducing the content of SiO₂ or Al₂O₃.

The tempered glass according to this embodiment has a temperature at 10^{2.5} dPa·s of preferably 1,600°C or less, 1,550°C or less, 1,530°C or less, 1,500°C or less, particularly preferably 1,450°C or less. As the temperature at 10^{2.5} dPa·s becomes lower, melting at lower temperature can be carried out, and hence a burden on a glass production facility such as a melting furnace is reduced more, and the bubble quality of glass is improved more easily. That is, as the temperature at 10^{2.5} dPa·s becomes lower, the production cost of the tempered glass is more likely to be reduced. Note that the temperature at 10^{2.5} dPa·s corresponds to a melting temperature. Further, the temperature at 10^{2.5} dPa·s is easily decreased by increasing the content of an alkali metal oxide, an alkaline earth metal oxide, ZnO, B₂O₃, or TiO₂ in the glass composition or by reducing the content of SiO₂ or Al₂O₃ in the glass composition.

The tempered glass according to this embodiment has a liquidus temperature of preferably 1, 075°C or less, 1, 050°C or less, 1,030°C or less, 1,010°C or less, 1,000°C or less, 950°C or less, 900°C or less, particularly preferably 880°C or less. Note that as the liquidus temperature becomes lower, the devitrification resistance and formability are improved more. Further, the liquidus temperature is easily decreased by increasing the content of Na₂O, K₂O, or B₂O₃ in the glass composition or by reducing the content of Al₂O₃, Li₂O, MgO, ZnO, TiO₂, or ZrO₂ in the glass composition.

The tempered glass according to this embodiment has a liquidus viscosity of preferably 10^{4.0} dPa·s or more, 10^{4.4} dPa·s or more, 10^{4.8} dPa·s or more, 10^{5.0} dPa·s or more, 10^{5.5} dPa·s or more, 10^{5.8} dPa·s or more, 10^{4.0} dPa·s or more, 10^{6.2} dPa·s or more, particularlypreferably 10^{6.3} dPa·s or more. Note that as the liquidus viscosity becomes higher, the devitrification resistance and formability are improved more. Further, the liquidus viscosity is easily increased by increasing the content of Na₂O or K₂O in the glass composition or by reducing the content of Al₂O₃, Li₂O, MgO, ZnO, TiO₂, or ZrO₂ in the glass composition.

The tempered glass according to this embodiment has a Young's modulus of preferably 65 GPa or more, 69 GPa or more, 71 GPa or more, 75 GPa or more, particularly preferably 77 GPa or more. As the Young's modulus becomes higher, the tempered glass is less deflected. Thus, in the case where the tempered glass is used for a touch panel display or the like, the degree of deformation in the tempered glass becomes smaller even when the surface of the tempered glass is pressed strongly with a pen or the like. As a result, the tempered glass is easily prevented from coming into contact with a liquid crystal device positioned behind the glass to cause a display failure.

A tempered glass sheet according to an embodiment of the present invention comprises the tempered glass according to this embodiment already described. Thus, the technical features and suitable ranges of the tempered glass sheet according to this embodiment are the same as those of the tempered glass according to this embodiment. Herein, the descriptions thereof are omitted for convenience sake.

The tempered glass sheet according to this embodiment has, as its size, a length of preferably 500 mm or more, 700 mm or more, particularly preferably 1,000 mm or more, and a width of 500 mm or more, 700 mm or more, particularly preferably 1,000 mm or more. When a tempered glass sheet having a large size is developed, the tempered glass sheet can be used for cover glass for a display part of a display of a large-screen television or the like, and the amount of glass increases by virtue of the large size, causing the recycling of a glass substrate for an LCD or a PDP to be easily promoted.

The tempered glass sheet according to this embodiment has a thickness of preferably 3.0 mm or less, 2.0 mm or less, 1.5 mm or less, 1.3 mm or less, 1.1 mm or less, 1.0 mm or less, 0.8 mm or less, particularly preferably 0.7 mm or less. On the other hand, when the thickness is too small, it is difficult to obtain desired mechanical strength. Thus, the thickness is preferably 0.1 mm or more, 0.2 mm or more, 0.3 mm or more, particularly preferably 0.4 mm or more.

Glass to be tempered according to an embodiment of the present invention comprises, as a glass composition in terms of mass%, 50 to 75% of SiO₂, 5 to 20% of Al₂O₃, 0 to 8% of B₂O₃, 5 to 20% of Na₂O, 0.1 to 10% of K₂O, 0.1 to 15% of MgO, and 0.001 to 5% of SrO+BaO, and has a mass ratio (MgO+CaO+SrO+BaO)/(MgO+ZrO₂) of 0.3 to 1.5. The technical features of the glass to be tempered according to this embodiment are the same as those of the tempered glass and tempered glass sheet according to this embodiment. Herein, the descriptions thereof are omitted for convenience sake.

When the glass to be tempered according to this embodiment is subjected to ion exchange treatment in a KNO₃ molten salt at 430°C, it is preferred that the compression stress value of the compression stress layer in the surface be 300 MPa or more and the thickness of the compression stress layer be 10 µm or more, it is more preferred that the compression stress in the surface be 500 MPa or more and the thickness of the compression stress layer be 30 µm or more, and it is still more preferred that the compression stress in the surface be 600 MPa or more and the thickness of the compression stress layer be 40 µm or more.

When ion exchange treatment is performed, the temperature of the KNO₃ molten salt is preferably 400 to 550°C, and the ion exchange time is preferably 2 to 10 hours, particularly preferably 4 to 8 hours. With this, the compression stress layer can be properly formed easily. Note that the glass to be tempered according to this embodiment has the above-mentioned glass composition, and hence the compression stress value and thickness of the compression stress layer can be increased without using a mixture of a KNO₃ molten salt and an NaNO₃ molten salt or the like. Further, even when a degraded KNO₃ molten salt is used, the compression stress value and thickness of the compression stress layer do not become extremely small.

The glass to be tempered, tempered glass, and tempered glass sheet according to this embodiment can be produced as described below.

Glass having a sheet shape or the like can be produced by first placing glass raw materials, which have been blended so as to have the above-mentioned glass composition, in a continuous melting furnace, melting the glass raw materials by heating at 1, 500 to 1, 600°C, fining the molten glass, and feeding the resultant to a forming apparatus, followed by forming into a sheet shape or the like and annealing.

It is preferred to adopt a float method as a method of forming glass into a sheet shape. The float method is a method by which glass sheets can be massively produced at low cost and by which a large glass sheet can be easily produced.

Various forming methods other than the float method may also be adopted. For example, forming methods may be adopted, such as an overflow down-draw method, a down-draw method (such as a slot down method or a re-draw method), a roll out method, and a press method.

Next, the resultant glass is subjected to tempering treatment, thereby being able to produce tempered glass. The resultant glass may be cut into pieces having a predetermined size before the tempering treatment, but the cutting after the tempering treatment is advantageous in terms of cost.

The tempering treatment is preferably ion exchange treatment. Conditions for the ion exchange treatment are not particularly limited, and optimum conditions may be selected in view of, for example, the viscosity properties, applications, thickness, and inner tensile stress of glass. The ion exchange treatment can be performed, for example, by immersing glass in a KNO₃ molten salt at 400 to 550°C for 1 to 8 hours. Particularly when the ion exchange of K ions in the KNO₃ molten salt with Na components in the glass is performed, it is possible to form efficiently a compression stress layer in a surface of the glass. Example

Examples of the present invention are hereinafter described. Note that the following examples are merely illustrative. The present invention is by no means limited to the following examples.

Tables 1 and 2 show examples of the present invention (sample Nos. 1 to 11). Note that in the tables, the term "Not measured" means that measurement has not yet been performed.

**[Table 1]**

| | | Example | | | | | |
|---|---|---|---|---|---|---|---|
| | | No. 1 | No. 2 | No. 3 | No. 4 | No. 5 | No. 6 |
| wt% | SiO₂ | 57.4 | 57.3 | 56.5 | 58.4 | 57.3 | 58.4 |
| | Al₂O₃ | 12.9 | 12.7 | 12.7 | 13.0 | 12.7 | 13.9 |
| | B₂O₃ | 2.0 | 1.9 | 1.9 | - | - | - |
| | Li₂O | - | 0.1 | 1.0 | 0.1 | 0.1 | - |
| | Na₂O | 14.5 | 14.0 | 14.0 | 14.3 | 14.0 | 13.4 |
| | K₂O | 5.0 | 5.1 | 5.1 | 5.2 | 7.0 | 6.5 |
| | MgO | 2.0 | 2.0 | 2.0 | 2.0 | 2.0 | 2.0 |
| | CaO | 2.0 | 2.0 | 2.0 | 2.0 | 2.0 | 2.0 |
| | SrO | 0.1 | 0.4 | 0.4 | 0.4 | 0.4 | - |
| | BaO | 0.1 | 0.4 | 0.4 | 0.4 | 0.4 | 0.2 |
| | ZrO₂ | 4.0 | 4.0 | 4.0 | 4.1 | 4.0 | 3.5 |
| ppm | Cl | 300 | - | - | 400 | - | 20 |
| | SnO₂ | - | 1,500 | - | 100 | 500 | 20 |
| | SO₃ | - | - | - | - | 500 | 900 |
| ρ [g/cm³] | | 2.54 | 2.55 | 2.56 | 2.55 | 2.56 | 2.52 |
| α [×10⁻⁷/°C] | | 99 | 100 | 100 | 101 | 106 | 101 |
| Ps [°C] | | 530 | 524 | 485 | 533 | 523 | 534 |
| Ta [°C] | | 571 | 565 | 524 | 577 | 566 | 579 |
| Ts [°C] | | 769 | 765 | 714 | 791 | 777 | 798 |
| 10^{4.0} [°C] | | 1,115 | 1,110 | 1,052 | 1,140 | 1,123 | 1,156 |
| 10^{3.0} dPa·s [°C] | | 1,296 | 1,289 | 1,231 | 1,319 | 1,300 | 1,339 |
| 10^{2.5} dPa·s [°C] | | 1,411 | 1,403 | 1,345 | 1,432 | 1,412 | 1,455 |
| TL [°C] | | 880 | 880 | 870 | 880 | 860 | 880 |
| log₁₀η_{TL} [dPa·s] | | 6.0 | 6.0 | 5.5 | 6.3 | 6.4 | 6.5 |
| CS [MPa] | | 925 | 910 | 737 | 893 | 822 | 884 |
| DOL [µm] | | 37 | 35 | 27 | 42 | 47 | 47 |

**[Table 2]**

| | | Example | | | | |
|---|---|---|---|---|---|---|
| | | No. 7 | No. 8 | No. 9 | No. 10 | No. 11 |
| wt% | SiO₂ | 59.1 | 58.1 | 58.0 | 58.3 | 57.9 |
| | Al₂O₃ | 12.0 | 13.5 | 13.2 | 12.9 | 13.9 |
| | B₂O₃ | - | - | - | - | - |
| | Li₂O | - | 0.1 | 0.1 | 0.1 | 0.1 |
| | Na₂O | 12.9 | 14.7 | 14.7 | 14.4 | 14.4 |
| | K₂O | 7.0 | 5.5 | 5.5 | 5.5 | 5.5 |
| | MgO | 2.0 | 2.0 | 2.0 | 2.0 | 2.0 |
| | CaO | 2.0 | 1.4 | 1.4 | 2.0 | 2.0 |
| | SrO | 0.3 | 0.1 | 0.1 | 0.1 | 0.1 |
| | BaO | - | 0.1 | 0.1 | 0.1 | 0.1 |
| | ZrO₂ | 4.5 | 4.4 | 4.7 | 4.5 | 4.0 |
| ppm | Cl | 100 | 10 | 800 | - | 200 |
| | SnO₂ | 2,000 | - | 800 | 10 | - |
| | SO₃ | - | 800 | - | 700 | - |
| ρ [g/cm³] | | 2.54 | 2.54 | 2.54 | 2.55 | 2.54 |
| α [×10⁻⁷/°C] | | 102 | Not measured | Not measured | Not measured | Not measured |
| Ps [°C] | | 532 | 533 | 534 | 533 | 536 |
| Ta [°C] | | 576 | 579 | 579 | 577 | 580 |
| Ts [°C] | | 794 | 798 | 799 | 793 | 796 |
| 10^{4.0} [°C] | | 1,149 | 1,152 | 1,149 | 1,142 | 1,147 |
| 10^{3.0} dPa·s [°C] | | 1,330 | 1,333 | 1,327 | 1,319 | 1,326 |
| 10^{2.5} dPa·s [°C] | | 1,445 | 1,449 | 1,441 | 1,431 | 1,440 |
| TL [°C] | | 880 | 870 | 880 | 880 | 870 |
| log₁₀η_{TL} [dPa·s] | | 6.4 | 6.6 | 6.5 | 6.4 | 6.5 |
| CS [MPa] | | 880 | 880 | 873 | 906 | 921 |
| DOL [µm] | | 49 | 49 | 48 | 43 | 44 |

1 Each of the samples in the tables was produced as described below. First, glass raw materials were blended so as to have glass compositions shown in the tables, and melted at 1, 580°C for 8 hours using a platinum pot. Thereafter, the resultant molten glass was cast on a carbon plate and formed into a sheet shape. The resultant glass sheet was evaluated for its various properties.

The density ρ is a value obtained by measurement using a well-known Archimedes method.

The thermal expansion coefficient α is a value obtained by measurement of an average thermal expansion coefficient in the temperature range of 30 to 380°C using a dilatometer.

The strain point Ps and the annealing point Ta are values obtained by measurement based on a method of ASTM C336.

The softening point Ts is a value obtained by measurement based on a method of ASTM C338.

The temperatures at viscosities of 10^{4.0} dPa·s, 10^{3.0} dPa·s, and 10^{2.5} dPa·s are values obtained by measurement using a platinum sphere pull up method.

The liquidus temperature TL is a value obtained by measurement of a temperature at which crystals of glass deposit after glass powder that has passed through a standard 30-mesh sieve (sieve opening: 500µm) and remained on a 50-mesh sieve (sieve opening: 300 µm) is placed in a platinum boat and then kept in a gradient heating furnace for 24 hours.

The liquidus viscosity log₁₀η_{TL} is a value obtained by measurement of the viscosity of glass at the liquidus temperature using a platinum sphere pull up method.

As evident from Tables 1 and 2, each of the samples Nos. 1 to 11 having a density of 2.56 g/cm³ or less and a thermal expansion coefficient of 99 to 107×10⁻⁷/°C was found to be suitable as a material for tempered glass, i.e., glass to be tempered. Further, each of the samples has a liquidus viscosity of 10^{5.5} dPa·s or more, thus being able to be formed into a sheet shape by a float method. In addition, each of the samples has a temperature at 10^{4.0} dPa·s of 1,156°C or less, and hence reduces a burden on a forming facility. Moreover, each of the samples has a temperature at 10^{2.5} dPa·s of 1,528°C or less, and hence is expected to allow a large number of glass sheets to be produced at low cost with high productivity. Note that the glass compositions of a surface layer of glass before and after tempering treatment are different from each other microscopically, but the glass composition of the whole glass does not substantially change before and after the tempering treatment.

Subsequently, both surfaces of each of the samples were subjected to optical polishing, and then subjected to ion exchange treatment through immersion in a KNO₃ molten salt at 440°C for 6 hours. After the ion exchange treatment, the surface of each of the samples was washed. Then, the compression stress value CS and thickness DOL of a compression stress layer in the surface were calculated from the number of interference stripes and each interval between the interference fringes, the interference fringes being observed with a surface stress meter (FSM-6000 manufactured by Toshiba Corporation). In the calculation, the refractive index and optical elastic constant of each of the samples were set to 1.52 and 28 [(nm/cm)/MPa], respectively.

As evident from Tables 1 and 2, when each of the samples Nos. 1 to 11 was subjected to ion exchange treatment using the KNO₃ molten salt, the CS and DOL of each of the samples were found to be 737 MPa or more and 27 µm or more, respectively.

### Industrial Applicability

The tempered glass and tempered glass sheet of the present invention are suitable for cover glass of a cellular phone, a digital camera, a PDA, or the like, or a glass substrate for a touch panel display or the like. Further, the tempered glass and tempered glass sheet of the present invention can be expected to find use in applications requiring high mechanical strength, for example, window glass, a substrate for a magnetic disk, a substrate for a flat panel display, cover glass for a solar cell, cover glass for a solid-state image sensing device, and tableware, in addition to the above-mentioned applications.

## Claims

1. A tempered glass having a compression stress layer in a surface thereof, comprising, as a glass composition in terms of mass%, 50 to 75% of SiO₂, 5 to 20% of Al₂O₃, 0 to 8% of B₂O₃, 5 to 20% of Na₂O, 0.1 to 10% of K₂O, 0.1 to 15% of MgO, and 0.001 to 5% of SrO+BaO, and having a mass ratio (MgO+CaO+SrO+BaO)/(MgO+ZrO₂) of 0.3 to 1.5.

2. The tempered glass according to claim 1, wherein the tempered glass comprises, as a glass composition in terms of mass%, 50 to 70% of SiO₂, 7 to 20% of Al₂O₃, 0 to 5% of B₂O₃, 8 to 20% of Na₂O, 1 to 10% of K₂O, 1.5 to 12% of MgO, and 0.001 to 3% of SrO+BaO, and has a mass ratio (MgO+CaO+SrO+BaO)/(MgO+ZrO₂) of 0.4 to 1.4.

3. The tempered glass according to claim 1 or 2, wherein the tempered glass comprises, as a glass composition in terms of mass%, 50 to 70% of SiO₂, 7 to 18% of Al₂O₃, 0 to 3% of B₂O₃, 10 to 17% of Na₂O, 2 to 9% of K₂O, 1.5 to 10% of MgO, and 0.001 to 3% of SrO+BaO, and has a mass ratio (MgO+CaO+SrO+BaO)/(MgO+ZrO₂) of 0.5 to 1.4.

4. The tempered glass according to any one of claims 1 to 3, wherein the tempered glass comprises, as a glass composition in terms of mass%, 50 to 70% of SiO₂, 8 to 17% of Al₂O₃, 0 to 1.5% of B₂O₃, 11 to 16% of Na₂O, 3 to 8% of K₂O, 1.8 to 9% of MgO, and 0.001 to 1% of SrO+BaO, and has a mass ratio (MgO+CaO+SrO+BaO)/(MgO+ZrO₂)of 0.5 to 0.9.

5. The tempered glass according to any one of claims 1 to 4, wherein the tempered glass comprises, as a glass composition in terms of mass%, 50 to 65% of SiO₂, 8 to 15% of Al₂O₃, 0 to 1% of B₂O₃, 12 to 15% of Na₂O, 4 to 7% of K₂O, 1.8 to 5% of MgO, and 0.001 to 0.5% of SrO+BaO, and has a mass ratio (MgO+CaO+SrO+BaO)/(MgO+ZrO₂)of 0.5 to 0.8.

6. The tempered glass according to any one of claims 1 to 5, wherein the tempered glass is substantially free of As₂O₃, Sb₂O₃, and PbO.

7. The tempered glass according to any one of claims 1 to 6, further comprising 100 to 3,000 ppm of SnO₂+SO₃+Cl.

8. The tempered glass according to any one of claims 1 to 7, wherein a compression stress value of the compression stress layer is 200 MPa or more, and a thickness of the compression stress layer is 10 µm or more.

9. The tempered glass according to any one of claims 1 to 8, wherein the tempered glass has a liquidus temperature of 1, 075°C or less.

10. The tempered glass according to any one of claims 1 to 9, wherein the tempered glass has a liquidus viscosity of 10^{4.0} dPa·s or more.

11. The tempered glass according to any one of claims 1 to 10, wherein the tempered glass has a temperature at 10^{4.0} dPa·s of 1,250°C or less.

12. The tempered glass according to any one of claims 1 to 11, wherein the tempered glass has a temperature at 10^{2.5} dPa·s of 1,600°C or less.

13. The tempered glass according to any one of claims 1 to 12, wherein the tempered glass has a density of 2.6 g/cm³ or less.

14. A tempered glass sheet, comprising the tempered glass according to any one of claims 1 to 13.

15. The tempered glass sheet according to claim 14, wherein the tempered glass sheet is formed by a float method.

16. The tempered glass sheet according to claim 14, wherein the tempered glass sheet is used for a touch panel display.

17. The tempered glass sheet according to claim 14, wherein the tempered glass sheet is used for a cover glass for a cellular phone.

18. The tempered glass sheet according to claim 14, wherein the tempered glass sheet is used for a cover glass for a solar cell.

19. The tempered glass sheet according to claim 14, wherein the tempered glass sheet is used for a protective member for a display.

20. A tempered glass sheet, comprising, as a glass composition in terms of mass%, 50 to 70% of SiO₂, 7 to 20% of Al₂O₃, 0 to 5% of B₂O₃, 8 to 20% of Na₂O, 1 to 10% of K₂O, 1.5 to 12% of MgO, 0.001 to 3% of SrO+BaO, and 100 ppm to 3,000 ppm of SnO₂+SO₃+Cl, having a mass ratio (MgO+CaO+SrO+BaO) / (MgO+ZrO₂) of 0.4 to 1.4, and having a length of 500 mm or more, a width of 500 mm or more, a thickness of 1.5 mm or less, a Young's modulus of 65 GPa or more, a compression stress value of a compression stress layer of 400 MPa or more, and a thickness of a compression stress layer of 30 µm or more.

21. A glass to be tempered, comprising, as a glass composition in terms of mass%, 50 to 75% of SiO₂, 5 to 20% of Al₂O₃, 0 to 8% of B₂O₃, 5 to 20% of Na₂O, 0.1 to 10% of K₂O, 0.1 to 15% of MgO, and 0.001 to 5% of SrO+BaO, and having a mass ratio (MgO+CaO+SrO+BaO)/(MgO+ZrO₂)of 0.3 to 1.5.
